# EUROPEAN PATENT SPECIFICATION

(11) **EP 3 049 271 B1**
(45) Date of publication and mention of the grant of the patent: **26.04.2017**
(21) Application number: 14776747.9
(22) Date of filing: 04.09.2014
(51) Int. Cl.: B60K 13/04, F01N 3/20, B60K 15/03

(54) **VEHICLE UNDERFLOOR STRUCTURE**
FAHRZEUGUNTERBODENSTRUKTUR
STRUCTURE DE SOUS-PLANCHER DE VÉHICULE

(30) Priority: 25.09.2013 JP 2013198692
(43) Date of publication of application: 03.08.2016
(73) Proprietor: TOYOTA JIDOSHA KABUSHIKI KAISHA, Toyota-shi, Aichi-ken, 471-8571 (JP)
(72) Inventor: CHINO, Hiroshi, Toyota-shi, Aichi, 471-8571 (JP)
(74) Representative: Intès, Didier Gérard André
(86) International application number: PCT/JP2014/074014
(87) International publication number: WO 2015/045881

(56) References cited:
- JP-A- 2008 238 964
- JP-A- 2010 018 322
- US-A1- 2004 160 052
- US-A1- 2006 040 145

## Description

### Technical Field

The present invention relates to a vehicle underfloor structure.

### Background Art

Japanese Patent Application Laid-Open (JP-A) No. 2009-143262 discloses placing a urea tank, that stores urea water that detoxifies (neutralizes) nitrogen oxide (NOx) within exhaust gas that is discharged from an engine, beneath a tire of a tire pan that is formed in a floor surface.
Japanese Patent Application JP 2008 238964 discloses a motorcycle with a tank and a pump unit provided at the bottom of the tank.

### SUMMARY OF INVENTION

### Technical Problem

By the way, in JP-A No. 2009-143262, a urea water take-out port, that is mounted to the bottom portion of the urea tank, protrudes-out beneath the floor, and therefore, there is the concern that load may be applied to the urea water take-out port from the vehicle lower side due to interference with the road surface or the like. In this case, load being applied to the urea water take-out port from the vehicle lower side can be suppressed by providing a protector at the vehicle lower side of the urea water take-out port. However, there is the concern that, when the protector is deformed by load, the load will be transmitted to the urea water take-out port via the deformed protector.

In view of the above-described circumstances, an object of the present invention is to provide a vehicle underfloor structure that can protect a protected member, that is mounted to the bottom portion of a tank, from external load.

### Solution to Problem

A vehicle underfloor structure of a first aspect of the present invention is defined by claim 1. This vehicle underfloor structure has: a tank in which a liquid is stored; a protected member that is mounted to a bottom portion of the tank; a lower portion protector that is mounted to a vehicle body, and that covers at least the protected member from a vehicle lower side; and an outer periphery protector that is mounted to the tank, extends toward the vehicle lower side and surrounds the protected member, at least a portion of the outer periphery protector being covered by the lower portion protector from the vehicle lower side, and a gap between a lower end portion of the outer periphery protector and the lower portion protector being narrow than a gap between the protected member and the lower portion protector.

In the vehicle underfloor structure of the first aspect, the protected member is covered from the vehicle lower side by the lower portion protector. Therefore, load from the vehicle lower side (external load) is transmitted to the vehicle body via the lower portion protector, and thus, the protected member can be protected from load. Further, in the above-described vehicle underfloor structure, the gap between the lower end portion of the outer periphery protector and the lower portion protector is made to be narrower than the gap between the protected member and the lower portion protector. Therefore, when the lower portion protector deforms due to load from the vehicle lower side, the deformed lower portion protector abuts the lower end portion of the outer periphery protector before abutting the protected member. Therefore, load is transmitted to the outer periphery protector and the tank via the deformed lower portion protector. Accordingly, the protected member that is mounted to the bottom portion of the tank can be protected from external load (load from the vehicle lower side).

In addition, in the vehicle underfloor structure of the first aspect, the protected member is a pump module, and the outer periphery protector is formed in a shape of a tube at which a portion is open in a peripheral direction.

In the vehicle underfloor structure of the first aspect, the outer periphery protector is formed in the shape of a tube at which a portion is open in the peripheral direction. Therefore, pipes and wires can be easily connected to the pump module through the opening of the outer periphery protector.

In a vehicle underfloor structure of a second aspect of the present invention, in the vehicle underfloor structure of the first aspect, the outer periphery protector is formed of resin.

In the vehicle underfloor structure of the second aspect, because the outer periphery protector is formed of resin, cost and weight can be reduced. Further, because the outer periphery protector can be mounted to the tank by welding, the mounting structure can be made to be simple as compared with, for example, a structure of mounting by screws.

In a vehicle underfloor structure of a third aspect of the present invention, in the vehicle underfloor structure of the first aspect or the second aspect, the lower portion protector is formed of resin.

In the vehicle underfloor structure of the third aspect, because the lower portion protector is formed of resin, cost and weight can be reduced. Further, if the deformation of the lower portion protector due to load is deformation within the elastic limit, the lower portion protector can return to its original form after deforming. Therefore, friction and abnormal sound, that arise due to the vehicle traveling with the lower portion protector and the outer periphery protector abutting one another, can be prevented.

In a vehicle underfloor structure of a fourth aspect of the present invention, in the vehicle underfloor structure of any one aspect of the first aspect through the third aspect, the outer periphery protector extends further toward the vehicle lower side than the protected member; and a portion of the lower portion protector, which portion faces a lower end portion of the outer periphery protector, protrudes toward a vehicle upper side.

In the vehicle underfloor structure of the fourth aspect, the outer periphery protector is extended further toward the vehicle lower side than the protected member, and the portion of the lower portion protector, which portion faces the lower end portion of the outer periphery protector, is made to protrude-out toward the vehicle upper side. Therefore, the gap between the protected member and the lower portion protector can be made to be wider than the gap between the lower end portion of the outer periphery protector and the lower portion protector, as compared with, for example, a case in which the outer periphery protector is not extended further toward the vehicle lower side than the protected member or a case in which the portion of the lower portion protector, which portion faces the lower end portion of the outer periphery protector, is not made to protrude-out toward the vehicle upper side. Therefore, the lower portion protector, that has deformed due to load from the vehicle lower side, abutting the protected member can be suppressed. Namely, the protected member, that is mounted to the bottom portion of the tank, can be effectively protected from external load.

### Advantageous Effects of Invention

The vehicle underfloor structure of the first aspect of the present invention has the excellent effect that the protected member, that is mounted to the bottom portion of the tank, can be protected from external load.

The vehicle underfloor structure of the first aspect of the present invention further has the excellent effect that pipes and wires can be easily connected to the pump module through the opening of the outer periphery protector.

The vehicle underfloor structure of the second aspect of the present invention has the excellent effects that cost and weight can be reduced, and the mounting structure can be made to be simple because the outer periphery protector can be mounted to the tank by welding.

The vehicle underfloor structure of the third aspect of the present invention has the excellent effects that cost and weight can be reduced, and friction and abnormal sound, that arise due to the vehicle traveling with the lower portion protector and the outer periphery protector abutting one another, can be prevented.

The vehicle underfloor structure of the fourth aspect of the present invention has the excellent effect that the protected member, that is mounted to the bottom portion of the tank, can be effectively protected from external load.

### BRIEF DESCRIPTION OF DRAWINGS

Fig. 1 is a cross-sectional view, along a vehicle transverse direction, of a vehicle underfloor structure relating to a first embodiment.
Fig. 2 is a cross-sectional view, along line 2-2, of the vehicle underfloor structure shown in Fig. 1.
Fig. 3 is a cross-sectional view, along line 3-3, of the vehicle underfloor structure shown in Fig. 1.
Fig. 4 is a cross-sectional view, along the vehicle transverse direction, of a vehicle underfloor structure relating to a second embodiment.

### DESCRIPTION OF EMBODIMENTS

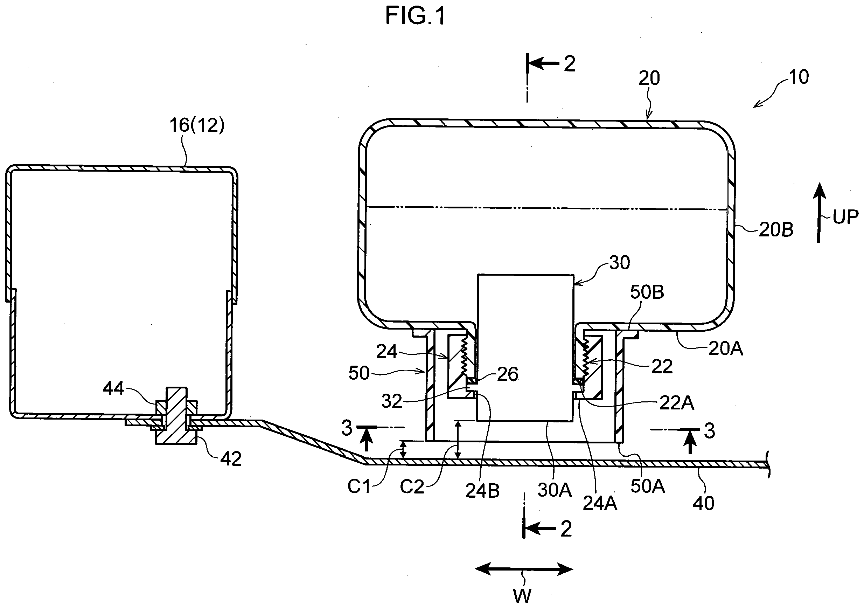

A first embodiment of a vehicle underfloor structure relating to the present invention is described hereinafter by using Fig. 1 through Fig. 3. Note that, arrow FR that is shown appropriately in these drawings indicates the vehicle front side, arrow UP indicates the vehicle upper side, and arrow W indicates the vehicle transverse direction.

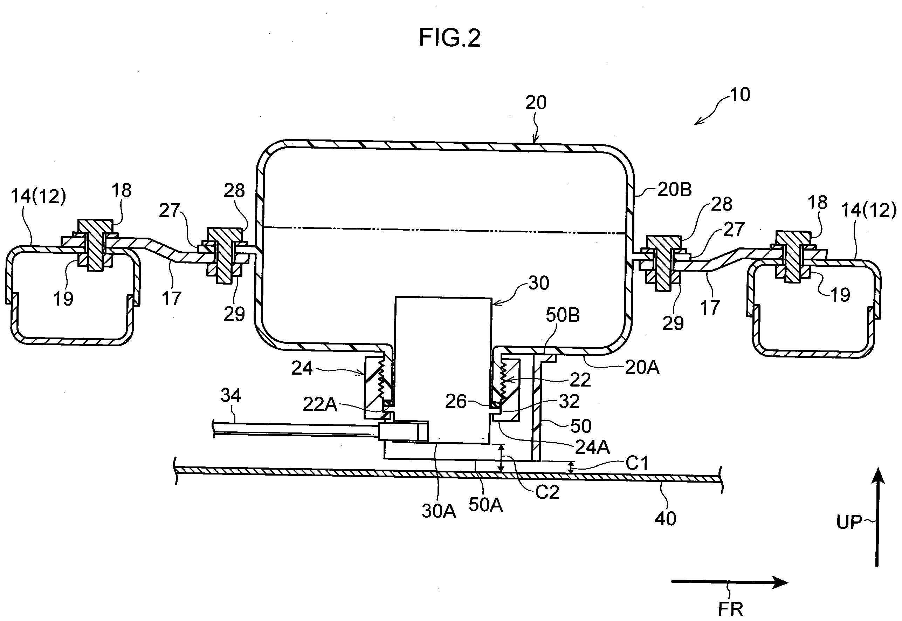

A vehicle underfloor structure 10 of the first embodiment is applied to further toward the vehicle lower side than an unillustrated floor panel. As shown in Fig. 1 and Fig. 2, the vehicle underfloor structure 10 has a tank 20, a pump module 30, a lower portion protector 40, and an outer periphery protector 50. Note that the tank 20 is an example of the tank of the present invention, the pump module 30 is an example of the protected member of the present invention, the lower portion protector 40 is an example of the lower portion protector of the present invention, and the outer periphery protector 50 is an example of the outer periphery protector of the present invention.

The tank 20 is structured so as to be able to store a liquid (in the present embodiment, urea water that serves as an example of the liquid) at the interior thereof. Further, the tank 20 is formed of resin. An opening portion 22, that is shaped as a cylindrical tube and that protrudes-out toward the vehicle lower side, is formed in a bottom portion 20A of the tank 20. This opening portion 22 is screwed-into the inner side of cap 24 that is shaped as a cylindrical tube having a bottom. The cap 24 is formed of resin, and a through-hole 24B is formed in a bottom portion 24A of the cap 24. A portion of the pump module 30 is inserted through this through-hole 24B into the tank 20. Further, the other portion of the pump module 30 is disposed at the lower side of the cap 24 and is exposed to the exterior.

Further, an O-ring 26 and a flange portion 32 of the pump module 30 are disposed and nipped between an end portion 22A of the opening portion 22 and the bottom portion 24A of the cap 24, in that order from the end portion 22A side. Note that the flange portion 32 is a portion that projects-out from the side surface of the pump module 30. The O-ring 26 fits tightly to the end portion 22A of the opening portion 22 and to the flange portion 32, and prevents urea water from leaking from the opening portion 22 of the tank 20.

As shown in Fig. 2, projecting portions 27 that project-out in the vehicle longitudinal direction are formed respectively at side portions 20B of the tank 20. These projecting portions 27 are mounted via brackets 17 respectively to cross members 14, that are disposed adjacent to the tank 20 in the vehicle longitudinal direction, of a chassis frame 12 that is disposed further toward the vehicle lower side than an unillustrated floor panel. Concretely, the projecting portions 27 are mounted to the brackets 17 by using bolts 28 and nuts 29, and the brackets 17 are mounted to cross members 14 by using bolts 18 and nuts 19. Note that the chassis frame 12 of the present embodiment has a pair of left and right side rails 16 that extend in the vehicle longitudinal direction, and the cross members 14 that are disposed between the both side rails 16 and are disposed with an interval therebetween in the vehicle longitudinal direction and connect the both side rails 16.
In the present embodiment, the tank 20 is mounted to the cross members 14 via the brackets 17, but the present invention is not limited to this structure, and the tank 20 may be mounted directly to the cross members 14 without using the brackets 17. Further, the tank 20 may be mounted to the side rails 16, or may be mounted to both the side rails 16 and the cross members 14. Namely, the mounting structure is not limited provided that the tank 20 is mounted to a member that structures the vehicle body, and preferably, to the chassis frame 12 that is a member that structures the skeleton of the vehicle body. Note that, in the case of a monocoque vehicle, it suffices to mount the tank 20 and the lower portion protector 40 to the cross members.

The pump module 30 is mounted to the bottom portion 20A of the tank 20 via the opening portion 22 due to the flange portion 32 being nipped between the end portion 22A of the opening portion 22 and the bottom portion 24A of the cap 24. This pump module 30 is structured so as to send the urea water, that is stored within the tank 20, out through a pipe 34 to an unillustrated urea water jetting device. Note that nitrogen oxide (NOx) is reduced due to urea water being jetted-out from the urea water jetting device into the exhaust gas that is discharged from the engine.

As shown in Fig. 1, the lower portion protector 40 is mounted to the side rails 16 of the chassis frame 12 by using bolts 42 and nuts 44. Further, the lower portion protector 40 is a component produced by forming a metal material into a plate shape (i.e., is a steel plate), and extends in the vehicle transverse direction (in the present embodiment, toward the vehicle transverse direction inner side) from the side rails 16, and covers at least the pump module 30 from the vehicle lower side. Concretely, the lower portion protector 40 covers the pump module 30 and the outer periphery protector 50 from the vehicle lower side. Note that it suffices for the lower portion protector 40 to cover at least a portion of the outer periphery protector 50 from the vehicle lower side.

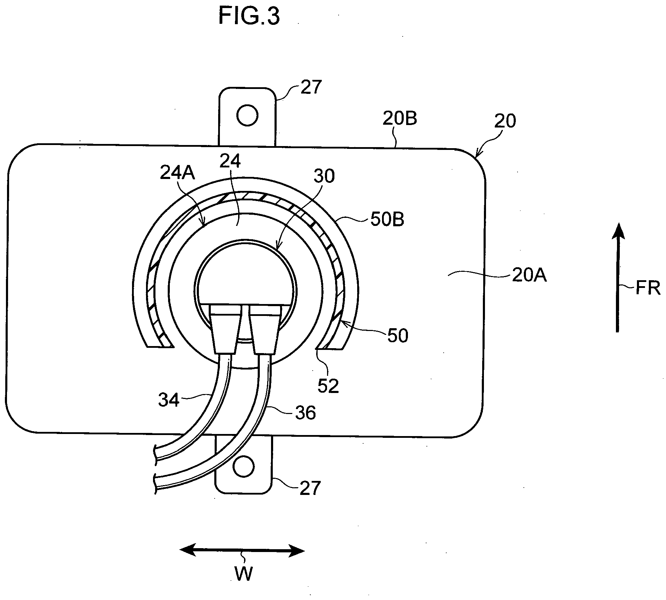

As shown in Fig. 1 and Fig. 2, the outer periphery protector 50 is formed of resin (in the present embodiment, high-density polyethylene that is an example of a thermoplastic resin), and is mounted to the tank 20 and surrounds the pump module 30. Concretely, the outer periphery protector 50 is formed in the shape of a tube that is partially open in the peripheral direction (in other words, the shape of a tube having an opening 52 at a portion thereof in the peripheral direction as seen in a cross-section in a direction orthogonal to the axial direction), and is mounted to the bottom portion 20A of the tank 20 so as to surround the pump module 30. Note that, in the present embodiment, the outer periphery protector 50 is formed in the shape of a tube that is C-shaped in cross-section (see Fig. 3). As shown in Fig. 2 and Fig. 3, the pipe 34 and a wire (e.g., a wire harness) 36 are connected to the pump module 30 through the opening 52 of the outer periphery protector 50.

Further, the outer periphery protector 50 extends further toward the vehicle lower side than the pump module 30. Namely, a lower end portion 50A of the outer periphery protector 50 is positioned further toward the vehicle lower side than a lower end portion 30A of the pump module 30. On the other hand, a flange portion 50B, that projects-out toward the outer side (the radial direction outer side in the present embodiment), is formed at the upper end portion of the outer periphery protector 50. Note that, in the present embodiment, because the flange portion 50B is welded to the bottom portion 20A of the tank 20, the welded surface area of the tank 20 and the outer periphery protector 50 is ensured. Further, in the present embodiment, the peripheral wall portion of the outer periphery protector 50 extends along the axial direction toward the vehicle lower side as seen in a cross-section along the axial direction (see Fig. 1 and Fig. 2). Note that the present invention is not limited to the above-described structure, and the outer wall portion of the outer periphery protector 50 may extend toward the vehicle lower side at an incline with respect to the axial direction, as seen in a cross-section along the axial direction. For example, at the outer periphery protector 50, as seen in a cross-section along the axial direction, the peripheral wall portion may be inclined with respect to the axial direction such that the interval between facing portions of the peripheral wall portion is wider at the lower end portion 50A than at the upper end portion, or the peripheral wall portion of the outer periphery protector 50 may be inclined with respect to the axial direction such that the interval between facing portions of the peripheral wall portion is narrower at the lower end portion 50A than at the upper end portion.

The outer periphery protector 50 is covered from the vehicle lower side by the lower portion protector 40. Further, a gap C1 between the lower end portion 50A of the outer periphery protector 50 and the lower portion protector 40 is narrower than a gap C2 between the lower end portion 30A of the pump module 30 and the lower portion protector 40.

Operation and effects of the vehicle underfloor structure 10 of the present embodiment are described next.
In the vehicle underfloor structure 10, the pump module 30 is covered by the lower portion protector 40 from the vehicle lower side. Therefore, load (external load) from the vehicle lower side that is due to interference with the road surface is transmitted to the chassis frame 12 via the lower portion protector 40, and therefore, the pump module 30 can be protected from load. Further, even if the lower portion protector 40 deforms due to load, because the gap C1 is narrower than the gap C2, the deformed lower portion protector 40 abuts the lower end portion 50A of the outer periphery protector 50 before abutting the pump module 30. Due thereto, load is transmitted to the outer periphery protector 50, the tank 20 and the chassis frame 12 via the deformed lower portion protector 40. Accordingly, the pump module 30, that is mounted to the bottom portion 20A of the tank 20, can be protected from external load.

As shown in Fig. 3, the outer periphery protector 50 is formed in the shape of a tube that is partially open in the peripheral direction. Therefore, the pipe 34 and the wire 36 can be easily connected to the pump module 30 through the opening 52 of the outer periphery protector 50.

Further, because the outer periphery protector 50 is formed of resin, cost and weight can be reduced. Further, because the outer periphery protector 50 is mounted to the tank 20 by welding, the mounting structure can be made simple as compared with, for example, a structure of mounting by screws.

A second embodiment of the vehicle underfloor structure relating to the present invention is described. Note that structures, operation and effects that are the same as those of the first embodiment are denoted by the same reference numerals, and description thereof is omitted.

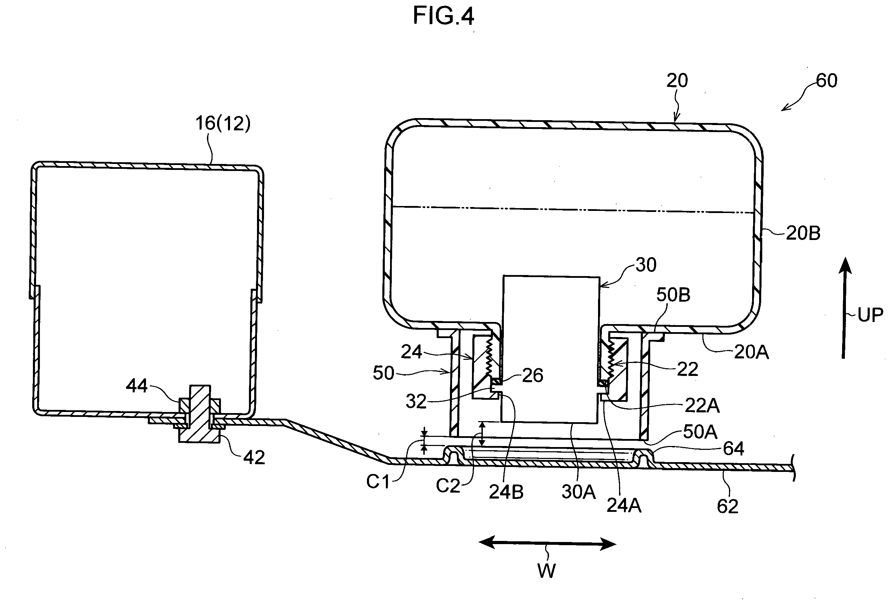

As shown in Fig. 4, in a vehicle underfloor structure 60 of the present embodiment, a protruding portion 64 that protrudes toward the vehicle upper side is formed at the portion, that faces the lower end portion 50A of the outer periphery protector 50, of a lower portion protector 62. This protruding portion 64 is a so-called bead that is formed by the lower portion protector 62 being pushed-out toward the vehicle upper side. Further, the protruding portion 64 is formed in continuation at the portion that faces the lower end portion 50A. Note that, other than the structure of the protruding portion 64, the lower portion protector 62 has the same structure as the lower portion protector 40 of the first embodiment.

Operation and effects of the vehicle underfloor structure 60 of the second embodiment are described next.
In the vehicle underfloor structure 60, the protruding portion 64 is formed at the portion of the lower portion protector 62, which portion faces the lower end portion 50A of the outer periphery protector 50. Therefore, when the lower portion protector 62 deforms due to load from the vehicle lower side, the protruding portion 64 abuts the lower end portion 50A. Here, in the vehicle underfloor structure 60, the gap C2 can be formed to be wider than the gap C1, as compared with the vehicle underfloor structure 10 of the first embodiment. Therefore, the lower portion protector 62, that deforms due to load from the vehicle lower side, abutting the pump module 30 can be suppressed. Namely, the pump module 30, that is mounted to the bottom portion 20A of the tank 20, can be effectively protected from external load (load from the vehicle lower side).

In the vehicle underfloor structure 60 of the second embodiment, the protruding portion 64 is formed in continuation at the portion that faces the lower end portion 50A. However, the present invention is not limited to this structure, and the protruding portion 64 may be formed intermittently at portions that face the lower end portion 50A.

In the vehicle underfloor structure 10 of the first embodiment, the lower portion protector 40 is made to be a steel plate. However, the present invention is not limited to this structure, and the lower portion protector 40 may be formed of resin (e.g., high-density polyethylene). By forming the lower portion protector 40 of resin in this way, cost and weight can be reduced. Further, if the deformation of the lower portion protector 40 due to load is deformation within the elastic limit, the lower portion protector 40 can return to its original form after deformation (after temporarily deforming). Therefore, friction and abnormal sound, that arise due to the vehicle traveling with the lower portion protector 40 and the outer periphery protector 50 abutting one another, can be prevented. Moreover, generation of rust also can be prevented. Note that forming the lower portion protector 40 of resin may be applied to the vehicle underfloor structure 60 of the second embodiment.

Further, in the vehicle underfloor structure 10 of the first embodiment, there is a structure in which the pump module 30 is surrounded by the outer periphery protector 50 that is shaped as a tube that is C-shaped in cross-section, but the present invention is not limited to this structure. For example, there may be a structure in which the pump module 30 is surrounded by an outer periphery protector that is shaped as a tube (a cylindrical tube, an oval tube, a polygonal tube, or the like) at which an opening (an opening for the pipe 34 and the wire 36 (a round hole, an oval hole, a long hole, a polygonal hole, or the like)) is formed in a portion thereof, or there may be a structure in which plural outer periphery protectors that are shaped as curved plates are provided and surround the pump module 30. Note that, by providing curved-plate-shaped outer periphery protectors at intervals around the pump module 30, the pipe 34 and the wire 36 can be connected easily to the pump module 30 through the gaps between the curved-plate-shaped outer periphery protectors that are adjacent to one another. Note that the above-described structure in which the pump module 30 is surrounded by an outer periphery protector that is shaped as a tube at which an opening is formed in a portion thereof, and the above-described structure in which the pump module 30 is surrounded by plural curved-plate-shaped outer periphery protectors, may be applied to the vehicle underfloor structure 60 of the second embodiment.

In the vehicle underfloor structure 10 of the first embodiment and the vehicle underfloor structure 60 of the second embodiment, the pump module 30 that is mounted to the bottom portion 20A of the tank 20 is protected from load from the vehicle lower side, but the present invention is not limited to this structure. A device other than the pump module 30, or joints, pipes or the like, may be mounted to the bottom portion 20A of the tank 20 and protected from load from the vehicle lower side.

Note that, in the vehicle underfloor structure 10 of the first embodiment and the vehicle underfloor structure 60 of the second embodiment, urea water is stored in the tank 20, but the present invention is not limited to this structure. A liquid other than urea water (e.g., washer fluid or water) may be stored in the tank 20 in accordance with the application.

Although embodiments of the present invention have been described above, the present invention is not limited to the above, and may of course be implemented by being modified in various ways other than the above within a scope that does not depart from the claims.

## Claims

1. A vehicle underfloor structure (10) comprising:
a tank (20) in which a liquid is stored;
a protected member (30) that is mounted to a bottom portion of the tank;
a lower portion protector (40) that is mounted to a vehicle body, and that covers at least the protected member from a vehicle lower side; and
an outer periphery protector (50) that is mounted to the tank, extends toward the vehicle lower side and surrounds the protected member (30); wherein:
at least a portion of the outer periphery protector (50) is covered by the lower portion protector (40) from the vehicle lower side;
a gap (C1) between a lower end portion (50A) of the outer periphery protector (50) and the lower portion protector (40) is narrower than a gap (C2) between the protected member (30) and the lower portion protector (40);
the protected member is a pump module (30); and
the outer periphery protector (50) is formed in a shape of a tube at which a portion is open in a peripheral direction.

2. The vehicle underfloor structure of Claim 1, wherein the outer periphery protector (50) is formed of resin.

3. The vehicle underfloor structure of Claim 1 or 2, wherein the lower portion protector (40) is formed of resin.

4. The vehicle underfloor structure of any one of Claims 1 through 3, wherein:
the outer periphery protector (50) extends further toward the vehicle lower side than the protected member (30); and
a portion of the lower portion protector (40), which portion faces a lower end portion (50A) of the outer periphery protector (50), protrudes toward a vehicle upper side.

## Patentansprüche

1. Fahrzeugunterbodenstruktur (10), umfassend:
einen Tank (20), in dem eine Flüssigkeit gelagert ist,
ein geschütztes Element (30), das an einem Bodenbereich des Tanks befestigt ist,
einen Unterabschnittsprotektor (40), der an einem Fahrzeugkörper befestigt ist und der wenigstens das geschützte Element von einer Fahrzeugunterseite her bedeckt, und
einen Außenumfangsprotektor (50), der an dem Tank befestigt ist, sich in Richtung der Fahrzeugunterseite erstreckt und das geschützte Element (30) umgibt, wobei
wenigstens ein Abschnitt des Außenumfangsprotektors (50) durch den Unterabschnittsprotektor (40) von der Fahrzeugunterseite her bedeckt ist,
eine Lücke (C1) zwischen einem unteren Endabschnitt (50A) des Außenumfangsprotektors (50) und des Unterabschnittsprotektors (40) schmaler ist als eine Lücke (C2) zwischen dem geschützten Element (30) und dem Unterabschnittsprotektor (40),
das geschützte Element ein Pumpenmodul (30) ist und
der Außenumfangsprotektor (50) in Form eines Rohres ausgebildet ist, an dem ein Abschnitt in einer Umfangsrichtung offen ist.

2. Fahrzeugunterbodenstruktur nach Anspruch 1, wobei der Außenumfangsprotektor (50) aus Harz gebildet ist.

3. Fahrzeugunterbodenstruktur nach Anspruch 1 oder 2, wobei der Unterabschnittsprotektor (40) aus Harz gebildet ist.

4. Fahrzeugunterbodenstruktur nach einem der Ansprüche 1 bis 3, wobei
der Außenumfangsprotektor (50) sich weiter in Richtung der Fahrzeugunterseite erstreckt als das geschützte Element (30) und
ein Abschnitt des Unterabschnittsprotektors (40), der einem unteren Endabschnitt (50A) des Außenumfangsprotektors (50) zugewandt ist, in Richtung einer Fahrzeugoberseite hervorsteht.

## Revendications

1. Structure de dessous de plancher de véhicule (10) comportant :
un réservoir (20) dans lequel un liquide est stocké ;
un élément protégé (30) qui est monté sur une partie inférieure du réservoir ;
un protecteur de partie inférieure (40) qui est monté sur une carrosserie de véhicule, et qui recouvre au moins l'élément protégé depuis un côté inférieur de véhicule ; et
un protecteur de périphérie extérieure (50) qui est monté sur le réservoir, s'étend vers le côté inférieur de véhicule et entoure l'élément protégé (30) ; dans laquelle :
au moins une partie du protecteur de périphérie extérieure (50) est recouverte par le protecteur de partie inférieure (40) depuis le côté inférieur de véhicule ;
un espace (C1) entre une partie d'extrémité inférieure (50A) du protecteur de périphérie extérieure (50) et le protecteur de partie inférieure (40) est plus étroit qu'un espace (C2) entre l'élément protégé (30) et le protecteur de partie inférieure (40) ;
l'élément protégé est un module de pompe (30) ; et
le protecteur de périphérie extérieure (50) est fabriqué sous la forme d'un tube au niveau duquel une partie est ouverte dans une direction périphérique.

2. Structure de dessous de plancher de véhicule selon la revendication 1, dans laquelle le protecteur de périphérie extérieure (50) est fabriqué en résine.

3. Structure de dessous de plancher de véhicule selon la revendication 1 ou 2, dans laquelle le protecteur de partie inférieure (40) est fabriqué en résine.

4. Structure de dessous de plancher de véhicule selon l'une quelconque des revendications 1 à 3, dans laquelle :
le protecteur de périphérie extérieure (50) s'étend davantage vers le côté inférieur de véhicule que l'élément protégé (30) ; et
une partie du protecteur de partie inférieure (40), laquelle partie fait face à une partie d'extrémité inférieure (50A) du protecteur de périphérie extérieure (50), dépasse vers un côté supérieur de véhicule.
